# EUROPEAN PATENT APPLICATION

(11) **EP 4 102 665 A1**
(43) Date of publication of application: **14.12.2022**
(21) Application number: 22175692.7
(22) Date of filing: 27.05.2022
(51) Int. Cl.: H02G 5/08, H01R 25/14, H02G 5/04

(54) **ELECTRICAL BUSWAY ASSEMBLY**

(30) Priority: 11.06.2021 IN 202131026060
(71) Applicant: Schneider Electric Industries SAS, 92500 Rueil-Malmaison (FR)
(72) Inventor: JAGADEESWARAN, Nithiyia Prakash, Coimbatore, Tamil Nadu (IN); BALASUBRAMANI, Karthik Kannan, Salem, Tamil Nadu (IN)
(74) Representative: Swea IP Law AB

(57) **Abstract**

The present invention relates to an electrical busway assembly (100) for accommodating plurality of plug-in devices (102), wherein said electrical busway assembly. The busway assembly (100) comprises an elongated housing member (106), plurality of insulating members (110), plurality of electrical busbars (112) and plurality of grid covers (114). The electrical busbars (112) are removably attached with said plurality of insulating members (110) at its rear side such that each of said insulating members (110) is interposed between every immediate pair of said electrical busbars (112) for providing electrical insulation to the busway assembly (100). The front side housing member (106) in open to receive said plurality of electrical busbars (112) and elongated housing member (106) and thereby providing installation provision for said plurality of plug-in devices (102). In an event of installation of said plug-in devices (102) onto said busway assembly (100), said grid covers (114) are configured to guide plurality of plug-in jaws (104) of said plug-in devices (102) to rest onto said electrical busbars (112)

## Description

### Field of invention

The present invention generally relates to electrical power distribution systems through assembling and constructing electrical busways. More particularly, the present invention relates to electrical busway assembly with continuous plug-in provisions, such that power can be drawn from any points along the electrical busway assembly. This invention can also find its utility in the field where several plug-in devices, fittings and accessories are required to draw power for electrical busway assembly.

### Background of the invention

Commercial and industrial power distribution systems may use several methods to deliver and distribute electrical energy. These methods may include heavy conductor cables run in trays or conduit. Electrical power may also be distributed using conductors or busbars in an enclosure. This arrangement is referred to as a busway. A busway is understood in the industry as a prefabricated electrical power distribution system having bus bars in a protective enclosure, and may include straight lengths, fittings, devices, and accessories. Electrical busways, without any limitations, can be considered as a grounded metal enclosure containing factory mounted conductors that are usually copper or aluminum bars, rods, or tubes. Alternatively, it can be defined as an electrical busway as a grounded metal enclosure containing factory mounted, bare, or insulated conductors, which are usually copper or aluminum bars, rods, or tubes.

A convention busway contains multiple busbar conductors sandwiched together and installed within a metal housing to form the busway. Each busbar conductor can carry a different phase of electrical current (referred as R, B and Y) or a neutral phase and therefore must be insulated from adjacent busbar conductors to prevent cross-phase electrical shorts and from the grounded metal busway housing to prevent ground faults. The busway can be of a feeder type, for electrical current, or a plug-in type, which allows for the connection of plug-in or bolt-on devices to branch circuits.

Typically, electrical busways include a plurality of electrical conductors (e.g., wires, cables or other suitable conductive members made from an electrically conductive material such as copper or aluminum) that are insulated by a coating, film or sleeve of a non-conductive material (e.g., electrical insulator) and enclosed in a housing, such as an elongated rail structure.

Conventionally elongated rectangular flat conductive busbars are arranged in an insulated manner within electrical busway for transporting the multi-phase high current electric power. Successive elongate busway sections are electrically connected or interlocked together in end-to-end relation to provide electrical continuity between a power source and a power consuming load. In one existing electrical busway assembly air gaps are introduced between the shaped bars to provide sufficient electrical insulated spacing to prevent arcing between the different phases of a multi-phase power system wherein each bar carries one-phase of the system current.

However, these type of orientation of busbar within the existing electrical busway assembly air gaps results in leakage in currents flowing through the conductive busbars. In addition to creating eddy current resulting huge drop in efficiency of the electrical busway assembly, the user has to subsist in an unsafe work environment with the existing busway assembly. Further the leakage of current results in electro-magnetic forces during the faulty event damaging the busway assembly.

Further, housing of the electrical busway in general comprises multiple pieces of track connected end to end with one or more electrically-isolated, conductive busbars attached to the housing. The busbar is adapted to permit electrical power tap-off along the length of the busbar. For example, when installed in a home or office setting, it is often used to permit lighting and/or electrical sockets to be placed in one or more locations along the electrical busway assembly.

There exist methods to supply power via a modular Continuous Bus Power Distribution System to provide continuous power to equipment or equipment cabinets via plug-in power taps that can be inserted into the busways along their length. Continuous plug-in busway systems allow plug-in devices via the plug-in power taps to be installed along the length of the busway sections.

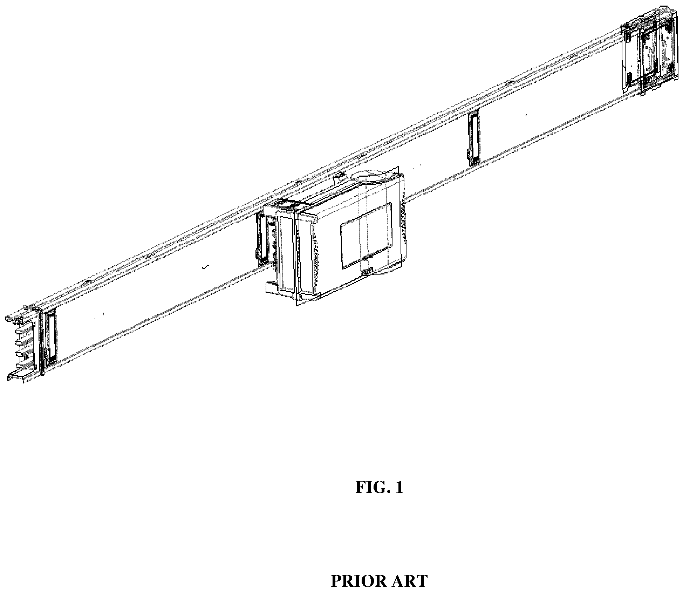

However these existing electrical busway assemblies as seen in figure 1 of the accompanying drawings, have only provision to install the tap-off devices, plug-in devices and/or loads only at dedicated locations. The limited tap-off power outlets creates inconvenience in terms of number and location when additional plug-in devices are required to draw power from the busbar. Further there exists no flexibility to install the plug-in devices with a change in their orientation.

Furthermore, while introducing multiple tap-off power outlets with existing electrical busway assembly insulation of the busbar becomes critical to maintain. That is, the existing insulating techniques are not compatible allow multiple tap-off power outlets in the electrical busway assembly. Additionally while providing multiple tap-off power outlets it is crucial to balance its mechanical strength while improving its performance with better electrical clearance and creepage. There exists no such knowledge devise an electrical busway assembly to overcome the above shortcoming.

With a view therefore to the problems associated with the configuration and operation conventional electrical busway assembly, the inventors felt to need to devise a novel busway assembly with multiple tap-off power outlets with dedicated insulation between two of immediate busbars carrying different phase of electrical current (R, B and Y). With all the phases of busbars constructed in a similar orientation with respect the housing of the electrical busway assemble provides a convenient installation of the plug-in devices with better clearance and clear creepage aspect. Thus the present invention provides an electrical busway assembly adapted to accommodate plug-in devices to draw electrical power any point of the busway assembly while maintaining a safe and efficient working environment.

### Summary of the invention

Accordingly, the present invention provides an electrical busway assembly for accommodating plurality of plug-in devices, wherein said electrical busway assembly comprises:
- an elongated housing member having a rear side and a front side, with plurality of protrusions extending from inner surface of a wall at said rear side of said housing member defining plurality of receiving grooves;
- plurality of insulating members removably attached with said housing member onto said plurality of protrusion;
- plurality of electrical busbars having a rear side and a front side, said electrical busbars being removably attached with said plurality of insulating members at its rear side and extending along the length of said housing member, wherein each of said insulating members is interposed between every immediate pair of said electrical busbars for providing electrical insulation to the busway assembly,
- plurality of grid covers removably attached with said plurality of electrical busbars for providing protection of the busway assembly from any foreign objects,
   wherein said front side housing member in open to receive said plurality of electrical busbars and elongated housing member and thereby providing installation provision for said plurality of plug-in devices;
   wherein each of said plurality of electrical busbars are profiled along its longitudinal length to be removably attached with said grid covers on the longitudinal edge at its front side, and
   wherein when said plug-in device engages with said busway assembly, said grid cover is configured to guide plurality of plug-in jaws of said plug-in device to rest onto said electrical busbars.

According to one embodiment of the invention, said electrical busway assembly comprises a pair of end covers disposed at both extremities of said busway assembly to block foreign objects.

According to one embodiment of the invention, said electrical busway assembly comprises plurality of junction brackets removably attached at either extremity of said busway assembly for attaching an adjacent busway assembly

According to one embodiment of the invention, said electrical busway assembly comprises a junction block removably attached at either extremity of said busway assembly for establishing electrical connection with an adjacent busway assembly.

According to one embodiment of the invention, outer surface of the rear side of said housing member receives at least one cover member for protection of communication cables running through said electrical busway assembly.

According to one embodiment of the invention, said plurality of insulating members comprise:
- profiled lips to receive and thereby support said electrical busbars and
- protruding arms extending perpendicular to said housing member disposed parallel to said electrical busbars having a length substantially equal to said busbars

According to one embodiment of the invention, each of said plurality of busbars are slidingly installed onto the said insulating member.

According to one embodiment of the invention, each of said grid covers is profiled T-shape lips at rear end to snap fit to snap fit to a receiving portion of said electrical busbars and arrow-shaped at front end to guide the plug-in jaws of said plug-in devices at the time of insertion.

According to one embodiment of the invention, each of said insulating members, grid covers and end covers is fabricated with polyester, thermoplastics or epoxy.

According to one embodiment of the invention, said housing member is fabricated with non-ferrous aluminum material.

### Brief description of the drawings

For better understanding, an illustrative embodiment of the invention will now be described with reference to the accompanying drawings. It will however be appreciated that the embodiment exemplified in the drawings are merely illustrative and not limitative to the scope of the invention, because it is quite possible, indeed often desirable, to introduce a number of variations in the embodiment that have been shown in the drawings. In the accompanying drawings:
Figure 1 is an isometric view of an exemplary existing electrical busway assembly predetermined dedicated locations to install the plug-in;
Figure 2 is an exploded isometric view of the invented electrical busway assembly according to one embodiment of the invention;
Figure 3(a) is an isometric view of the housing member of the invented electrical busway assembly according to one embodiment of the invention;
Figure 3(b) is a cut-away sectional view of the housing member as shown in figure 3(a) according to one embodiment of the invention;
Figure 4(a) is an isometric view of the busbar support member of the invented electrical busway assembly according to one embodiment of the invention;
Figure 4(b) is a cut-away sectional view of the busbar support member as shown in figure 4(a) according to one embodiment of the invention;
Figure 5(a) is an isometric view of the single busbar of the invented electrical busway assembly according to one embodiment of the invention;
Figure 5(b) is a cut-away sectional view of the busbar as shown in figure 5(a) according to one embodiment of the invention;
Figure 6(a) is an isometric view of the shielding member of the invented electrical busway assembly according to one embodiment of the invention;
Figure 6(b) is a cut-away sectional view of the shielding member as shown in figure 6(a) according to one embodiment of the invention;
Figure 7 is an isometric view of the junction block of the invented electrical busway assembly according to one embodiment of the invention;
Figure 8 is an isometric view of the end cover of the invented electrical busway assembly according to one embodiment of the invention;
Figure 9 is an isometric view of a junction bracket of the invented electrical busway assembly according to one embodiment of the invention;
Figure 10(a) is an isometric view of the cover member for protection of communication cables of the invented electrical busway assembly according to one embodiment of the invention;
Figure 10(b) is a cut-away sectional view of the cover member for protection of communication cables as shown in figure 10(a) according to one embodiment of the invention;
Figure 11(a) is an isometric view of the name plate of the invented electrical busway assembly according to one embodiment of the invention;
Figure 11(b) is a cut-away sectional view of the name plate as shown in figure 11(a) according to one embodiment of the invention;
Figure 12 is a cut-away sectional view of the invented electrical busway assembly according to one embodiment of the invention;
Figure 13 is an isometric view of the invented electrical busway assembly with a single plug-in device installed thereon according to one embodiment of the invention;
Figure 14 is an isometric view of the invented electrical busway assembly with plurality of plug-in device installed thereon according to one embodiment of the invention;
Figure 15 is a cut-away sectional view of the invented electrical busway assembly with a single plug-in device to be installed thereon according to one embodiment of the invention;
Figure 16 is a cut-away sectional view of the invented electrical busway assembly with a single plug-in device illustrating the installation according to one embodiment of the invention;

### Detailed description

In the following, numerous specific details are set forth to provide a thorough description of embodiment. Those skilled in the art will recognize and appreciate that, despite of the detailed nature of the exemplary embodiment provided herein; changes and modifications may be applied to said embodiment without limiting or departing from the generally intended scope.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises," "includes," "comprising," and/or "including," when used in this specification, specify the presence of stated features, integers, steps, operations, elements, and/or components, but do not preclude the presence or addition of one or more other features, integers, steps, operations, elements, components, and/or groups thereof.

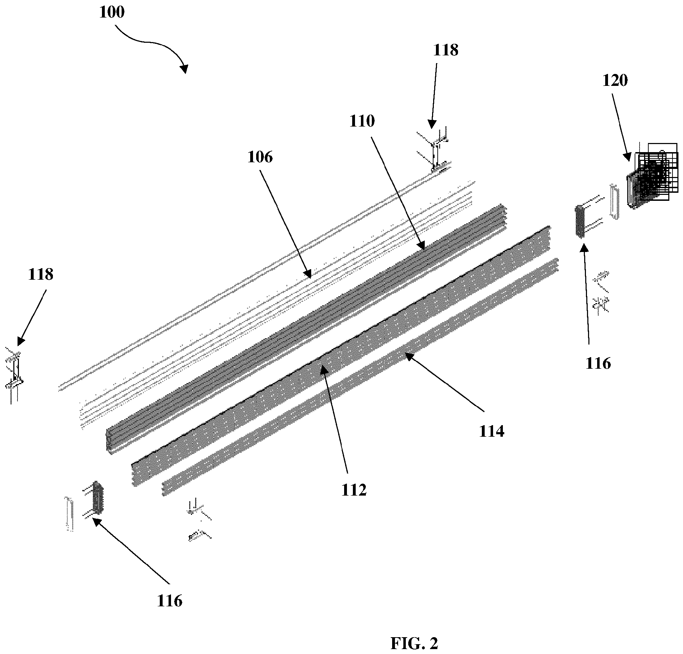

An exploded view of the invented electrical busway assembly (100) is illustrated in figure 2 of the accompanying drawings. The busway assembly (100) comprises elongated housing member (106), a plurality of electrical busbars (112), an insulating member (110) and grid covers (114). The electrical busway assembly (100) as disclosed herein can be a portion of a larger busway system, and one or more additional busway sections, joint assemblies and/or other components may be included in the larger busway system. The housing member (106) may be formed of aluminum, for example. More preferably fabricated out of non-ferrous type of material. The rear side (107) of the housing member (106) forms a wall whereas the front side (109) is kept open to receive said insulating members, for example.

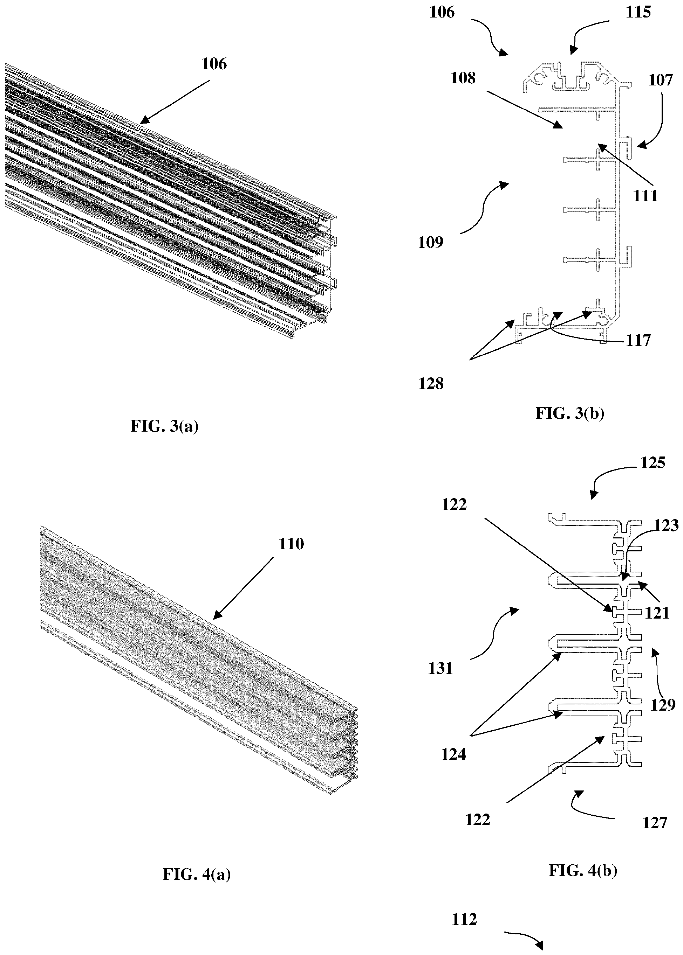

With reference to figure 2 along with figures 3(a) and 3(b), the housing member (106) is elongated and defines a longitudinal length of the electrical busway assembly (100) which varies with reference to the application and space available in the installation sites. The wall formed at the rear side consists of plurality of protrusions (108) extending outwardly from inner surface of wall. According to one preferred embodiment as depicted in figure 3(b) each of the protrusions (108) extends perpendicular to said wall and are configured to receive the insulating members. Stopping members (111) are provided at the rear end of each of the protrusions (108).

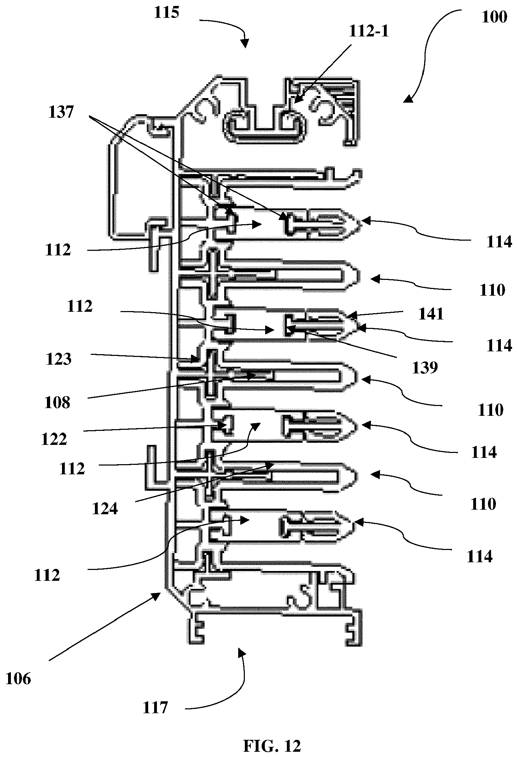

The housing member (106) has a top surface (115) and a bottom surface (117) extending outwardly from the rear side. The top surface (115) is configured to engage the earth busbar (112-1) as seen in figure 12. Additionally, top surface (115) and bottom surface (117) of the housing member (106) provide robust support to the electrical busbars (112) and insulating members. Plurality of downwards extending lips (128) is provided at the bottom surface (117) of the housing member (106). The lips can be referred to as insulator alignment and/or engagement member to vertically stack plurality electrical busbar assembly. The lips may be shaped and configured for receiving, mounting and/or suspending the busway assembly (100) as well as access barriers.

The protrusions (108) extending perpendicular to said wall of the housing member (106) define plurality of grooves or channel to receive the insulating member (110). The protrusions (108) of the housing member (106) provide support for the insulating member (110) as well as aligns the insulating member (110) with the electrical busbars (112). The insulating member (110) as seen in figures 4(a) and 4(b), comprises opening (121), profiled lips (122), pockets (123), and protruding arms (124). The protruding arms (124) are received onto the protrusions (108) of the housing member (106) through and thereby extending perpendicular to the wall of the housing member (106). The insulating member (110) is secured to the housing (106) by inserting the protrusions (108) of the housing member (106) into the openings (121) of the insulating member (110) until the stopping members (111) of the housing (106) are received into the pockets (121) of the insulating member (110), securing the insulating member (110) to the housing (106). Whereas the lips (122) of the insulating members are disposed at the receiving grooves of the housing member (106) and configured to receiving the plurality of electrical busbars (112).

Referring again to figures 2 and 4(a), the plurality of insulating members (110) are sandwiched between said housing member (106) the electrical busbars (112). Insulating members (110) are fabricated with plurality of profiled lips (122) and protruding arms (124) disposed in an alternative manner. As shown in the isometric view of figure 4(a) and the sectional view of 4(b) both profiled lips (122) and protruding arms (124) runs parallel to the length of housing member (106) where the profiled lips (122) and protruding arms (124) are stacked alternatively in transverse direction to the length of the housing member (106). The insulating member (110) according to one embodiment is continuous and has the same length or about the same length as the length of the housing member (106).

Further, with reference to figure 4(b), the insulating members (110) include a ledge portion opening (125) in an upwards direction defining an engagement lip at its upper portion for removably attached with the top surface of housing member (106). A similar ledge portion opening (127) in a downwards direction defining an engagement lip at its lower portion for removably attached with the bottom surface of housing member (106). These ledge portions, without any prejudices can be constructed as housing alignment and/or engagement feature.

The profiled lips (122) and protruding arms (124) of the insulating members (110) can be considered to be stacked at a central portion of the insulating member (110). As discussed above, the rear portion (129) of the insulating member (110) is removably attached to the housing member (106) and the front portion (131) is configured to receive the electrical busbars (112). More specifically, each of the profiled lips (122) is configured to receive an electrical busbar (112). Whereas each of the protruding arms (124) extends between every immediate pair of electrical busbars (112) and provide insulation between the busbars (112) in the busway assembly. The profiled lips (122), without any limitations, can be may be shaped and/or sized differently according to the profiles of the electrical busbars (112).

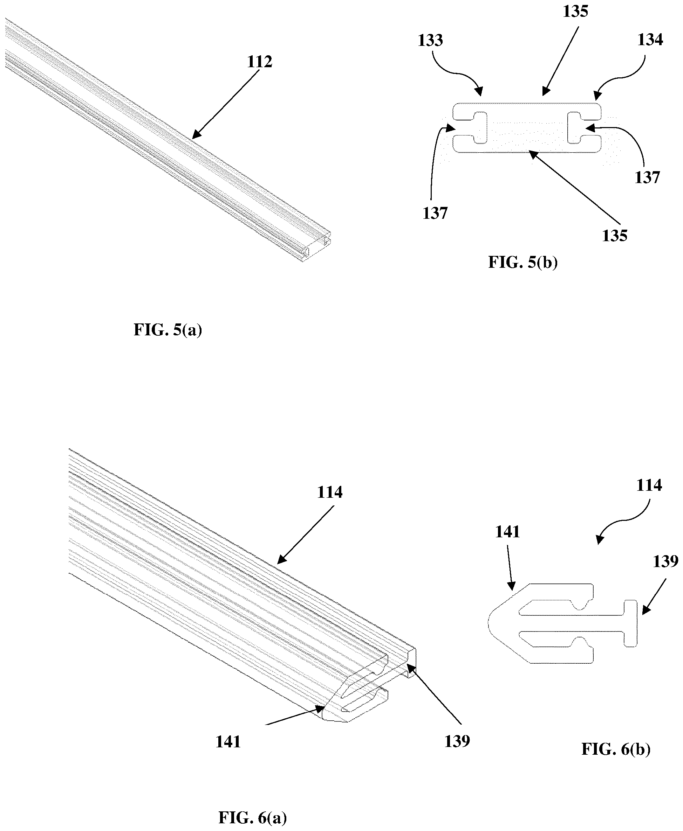

In figures 5(a) and 5(b) of the accompanying drawings, the isometric and cut-away section view respectively of a single electrical busbar (112) from the plurality of electrical busbars having a first side (133) and a second side (134). In this embodiment, both the first side (133) and the second side (134) of the electrical busbar (112) are profiled along its longitudinal length to be removably attached to the insulation member (110) and a grid cover (114). As seen in figure 4(b) the profile, according to one embodiment is a butterfly profile. The electrical busbar (112) includes straight or generally straight conductive surfaces (135) with receiving portions (137) at both the first (133) and second end (134) running along its longitudinal length which substantially is of equal length of the housing member (106). The profile of one side being a mirror reflection of another side. The busbar (112) is urged against the insulating member (110) such that a receiving portion (137) receives one of the lips (122) of the insulating member (110) thereby securing the busbar (112) to the insulating member (110). In addition, each grid cover (114) has a lip (139) that is configured to be received by a receiving portion (137) on the opposite side of the busbar (112) to snap-fit the grid cover (114) to the busbar (112). In the illustrated embodiment, the lips (139) have a T-shape similar to the lips (122) of the insulating member (110). Thus, either end of the busbar (112) is configured to be assembled to the insulating member (110) or to receive a grid cover (114).The opposite end (141) of the grid cover (114) is configured to extend over an end (133, 134) of a busbar (112) to provide an insulative and protective provision to restrict the access of user to the electrical busbar (112). The arrow-shaped end (141) of the grid cover (114) also guides the plug-in jaws (104) of said electrical plug-in devices (102) at the time of insertion onto the electrical busbars (112). Similar to the electrical busbars (112), the grid covers (114) are substantially of equal length of the electrical busbars (112).

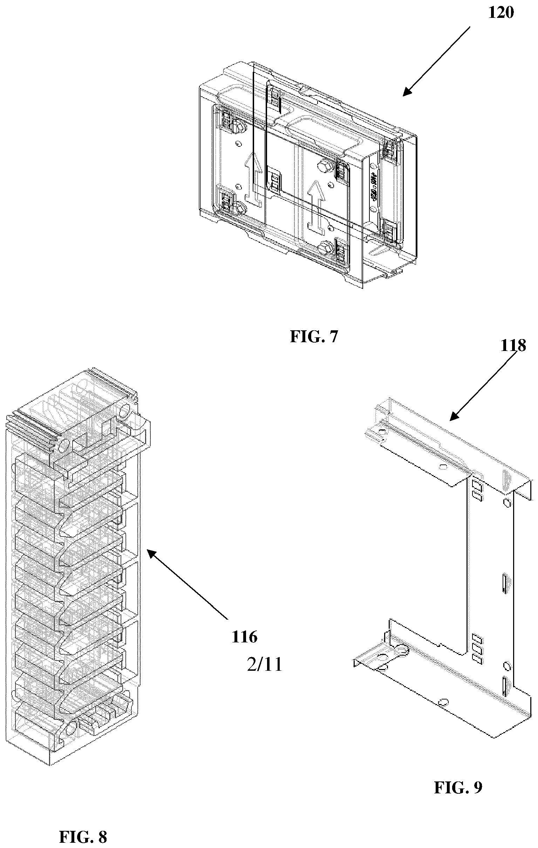

Further with reference to figure 2 along with figure 7 electrical busway assembly (100) comprises a junction block (120). Each of the junction block (120) is removably attached at either extremity of said busway assembly (100) for establishing electrical connection with an adjacent busway assembly. The electrical busway assembly (100) further comprises plurality of junction brackets (118). Each of junction brackets (118) is removably attached at either extremity of said busway assembly. These junction brackets (118) are adapted for attaching an adjacent busway assembly. As seen in figure 8, a pair of end covers (116) are disposed at both extremities of said busway assembly (100) to cover the internal members of the electrical busway assembly (100) from any foreign objects tracing through the junction block (120). In addition, end covers (116) also hold the internal part which are free to move.

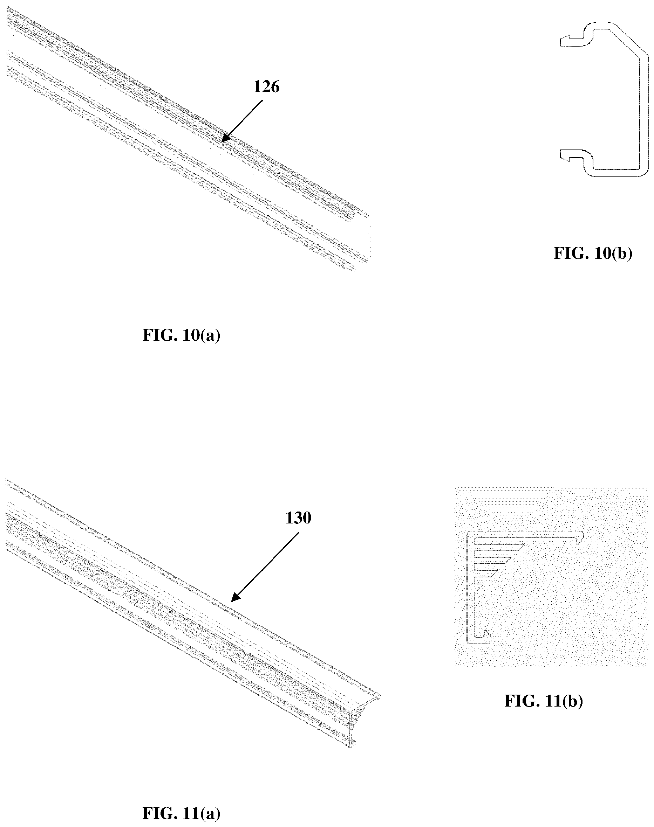

As seen in figure 9 of the accompanying drawings, junction brackets (118) are provided for extremity connection to the busway assembly. According to on embodiment of the invention, the junction brackets (118) are symmetrical bracket and used on either sides to make the assembly. With reference to figures 10(a) and 10(b), at least one cover member (126) for protection of communication cables running through said electrical busway assembly (100) is attached to said housing member (106). The cover member (126) is configured to ensure proper protection of the cables from any damages and lose of data. With reference to figure 11(a) and 11(b) at least one name plate (130) is provided for custom identification of busway ratings, color coding and special instruction through marking / stickering of the electrical busbars (112). According to one preferred embodiment of the invention, insulating members (110), grid covers (114), name plate (130) and end covers (116) are fabricated with polyester, thermoplastics or epoxy.

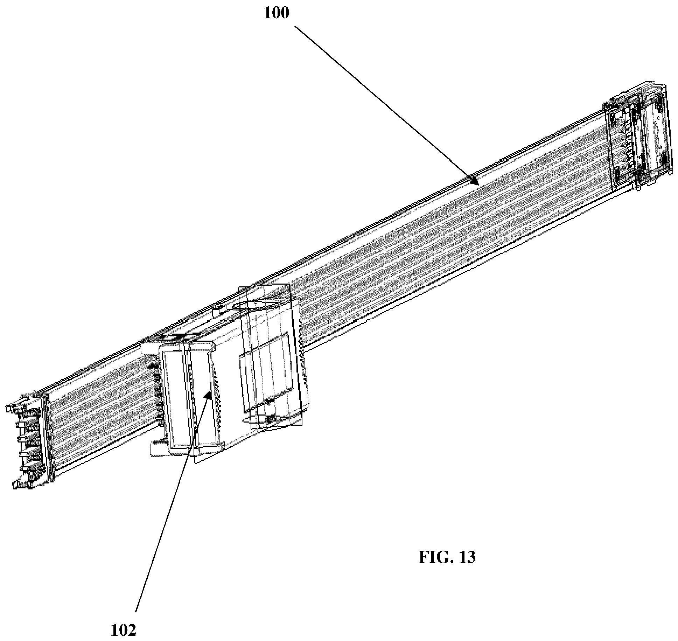

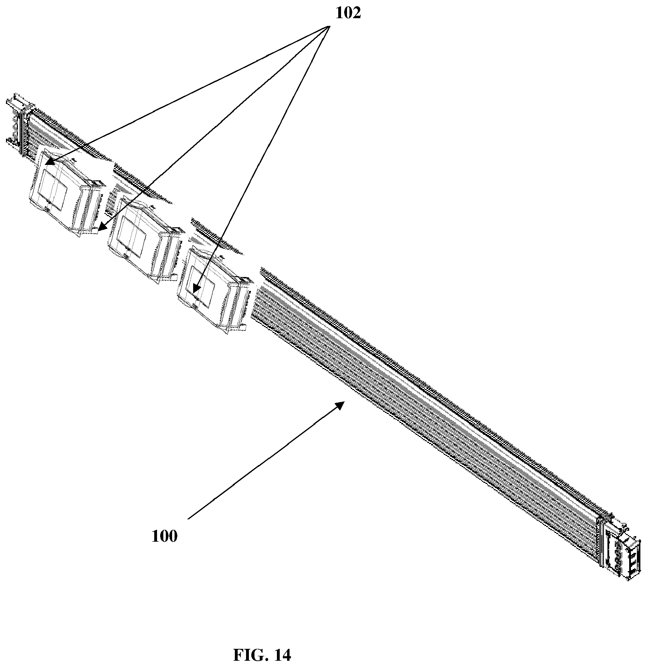

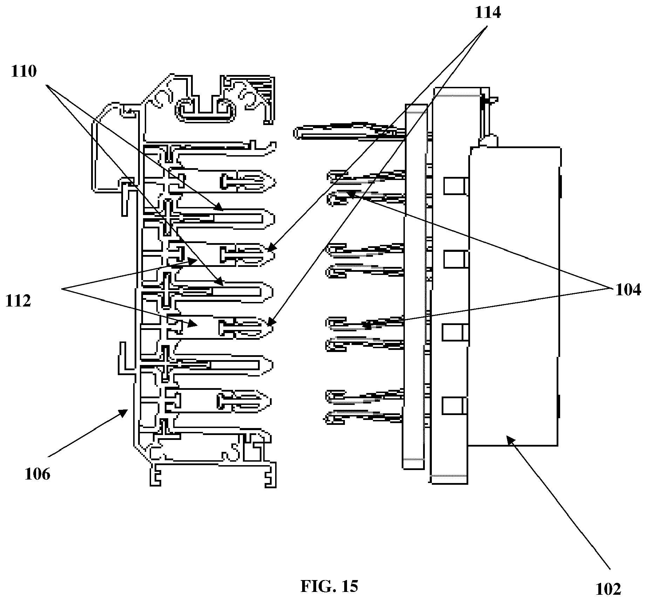

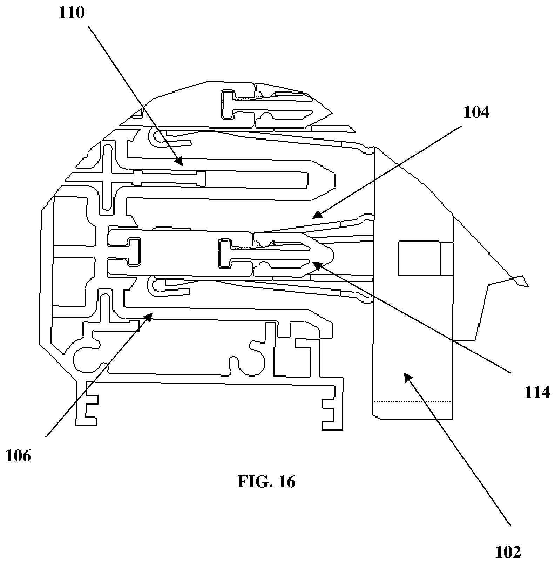

A cut-away sectional view of the housing member (106), insulating members (110), electrical busbars (112) and the grid covers (114) can be seen in figure 12 of the accompanying drawings. As illustrated in figures 15 and 16, the arrow-shaped rear side of the grid covers (114) are configured to guide plurality of plug-in jaws (104) of said plug-in device (102) to rest onto said electrical busbars (112) thus proving better electrical conductivity. The insulating members (110) thus provide dedicated insulation between two of immediate electrical busbars (112) carrying different phase of electrical current (R, B and Y). With said grid covers (114), in combination the insulating remembers allows all the phases of electrical busbars (112) constructed in a similar orientation with respect the housing member (106) of the electrical busway assemble provides a convenient installation of the plug-in devices (102) with better clearance and clear creepage aspect. Thus electrical busway assembly (100) allows user to accommodate plug-in devices (102) to draw electrical power any point along the length of the busway assembly (100) as depicts in figures 13 and 14.

As already mentioned, the foregoing description is illustrative of the invention and not limitative to its scope, because it will be apparent to persons skilled in the art to devise other alternative embodiments without departing from the broad ambit of the disclosures made herein.

### List of references

Electrical busbar assembly 100
Plugin-devices 102
Plugin-jaws 104
Housing member 106
Rear of housing member 107
Protrusions of housing member 108
Front of housing member 109
Insulating member 110
Stopping member of protrusion 111
Electrical busbar 112
Earth busbar 112-1
Grid covers 114
Top of housing member 115
End covers 116
Bottom of housing member 117
Junction brackets 118
Junction block 120
Opening in insulating member 121
Profiled lips 122
Receiving pocket 123
Protruding arms (of insulating members) 124
Top of insulating member 125
Cover member for protection of communication cables 126
Bottom of insulating member 127
Downwards extending lips of the housing member 128
Rear of insulating member 129
Name plate 130
Front of insulating member 131
First end of busbar 133
Second end of busbar 134
Conductive surface of busbar 135
Receiving opening of busbar 137
T-shaped lip of grid cover 139
Arrow-shaped end of grid cover 141

## Claims

1. An electrical busway assembly (100) for accommodating plurality of plug-in devices (102), wherein said electrical busway assembly (100) comprises:
- an elongated housing member (106) having a rear side and a front side, with plurality of protrusions (108) extending from inner surface of a wall at said rear side of said housing member (106) defining plurality of receiving grooves;
- plurality of insulating members (110) removably attached with said housing member (106) onto said plurality of protrusions (108);
- plurality of electrical busbars (112) having a rear side and a front side, said electrical busbars (112) being removably attached with said plurality of insulating members (110) at its rear side and extending along the length of said housing member (106), wherein each of said insulating members (110) is interposed between every immediate pair of said electrical busbars (112) for providing electrical insulation to the busway assembly,
- plurality of grid covers (114) removably attached with said plurality of electrical busbars (112) for providing protection of the busway assembly (100) from any foreign objects, wherein said front side housing member (106) in open to receive said plurality of electrical busbars (112) and elongated housing member (106) and thereby providing installation provision for said plurality of plug-in devices (102);
wherein each of said plurality of electrical busbars (112) are profiled along its longitudinal length to be removably attached with said grid covers (114) on the longitudinal edge at its front side, and
wherein when said plug-in device (102) engages with said busway assembly (100), said grid covers (114) are configured to guide plurality of plug-in jaws (104) of said plug-in device (102) to rest onto said electrical busbars (112).

2. The electrical busway assembly (100) for accommodating plurality of plug-in devices (102) as claimed in claim 1, wherein said electrical busway assembly (100) comprises a pair of end covers (116) disposed at both extremities of said busway assembly (100) to block foreign objects.

3. The electrical busway assembly (100) for accommodating plurality of plug-in devices (102), as claimed in any of the claims 1 to 2, wherein said electrical busway assembly (100) comprises plurality of junction brackets (118) removably attached at either extremity of said busway assembly (100) for attaching an adjacent busway assembly

4. The electrical busway assembly (100) for accommodating plurality of plug-in devices (102), as claimed in any of the claims 1 to 3, wherein said electrical busway assembly (100) comprises a junction block (120) removably attached at either extremity of said busway assembly (100) for establishing electrical connection with an adjacent busway assembly.

5. The electrical busway assembly (100) for accommodating plurality of plug-in devices (102), as claimed in any of the claims 1 to 4, wherein outer surface of the rear side of said housing member (106) receives at least one cover member (126) for protection of communication cables running through said electrical busway assembly (100).

6. The electrical busway assembly (100) for accommodating plurality of plug-in devices (102), as claimed in any of the claims 1 to 5, wherein said plurality of insulating members (110) comprise:
- profiled lips (122) to receive and thereby support said electrical busbars (112) and
- protruding arms (124) extending perpendicular to said housing member (106) disposed parallel to said electrical busbars (112) having a length substantially equal to said electrical busbars (112)

7. The electrical busway assembly (100) for accommodating plurality of plug-in devices (102), as claimed in any of the claims 1 to 6, wherein each of said plurality of electrical busbars (112) are slidingly installed onto the said insulating member.

8. The electrical busway assembly (100) for accommodating plurality of plug-in devices (102) as claimed in any of the claims 1 to 7, wherein each of said grid covers (114) is profiled T-shape lips (139) at rear end to snap fit to a receiving portion (137) of said electrical busbars (112) and arrow-shaped (141) at front end to guide the plug-in jaws (104) of said plug-in devices (102) at the time of insertion.

9. The electrical busway assembly (100) for accommodating plurality of plug-in devices (102), as claimed in any of the claims 1 to 8, wherein each of said insulating members (110), grid covers (114) and end covers is fabricated with polyester, thermoplastics or epoxy.

10. The electrical busway assembly (100) for accommodating plurality of plug-in devices (102), as claimed in any of the claims 1 to 9, wherein said housing member (106) is fabricated with non-ferrous aluminum material.
